Europäisches Patentamt

European Patent Office

Office européen des brevets

(19)

(11) Veröffentlichungsnummer: **0 062 358**
A2

# (12) EUROPÄISCHE PATENTANMELDUNG

(21) Anmeldenummer: 82103037 6

(22) Anmeldetag: 07.04.82

(51) Int. Cl.³: **B 60 B 19/00,** B 60 B 35/00

(30) Priorität: 07.04.81 DE 8110540 U

(43) Veröffentlichungstag der Anmeldung: **13.10.82** Patentblatt 82/41

(84) Benannte Vertragsstaaten: **AT BE CH FR LI LU NL**

(71) Anmelder: SABO Maschinenfabrik GmbH & Co KG, Postfach 310 105, D-5270 Gummersbach 31 Dieringhausen (DE)

(72) Erfinder: Brenner, Hans Josef, Ing. (grad.), Am Fliederbusch 1, D-5063 Overath 7 (DE)

(74) Vertreter: Groening, Hans Wilhelm, Dipl.-Ing., Siebertstrasse 4 Postfach 860 340, D-8000 München 86 (DE)

(54) **Rad, insbesondere für Rasenmäher.**

(57) Es wird ein Rad, insbesondere für einen Rasenmäher, angegeben, mit einer Radachse (8), die an ihrem dem Gehäuse (1) des Rasenmähers zugewandten Ende ein Gewinde (7) zum Einschrauben der Radachse (8) in eine Gewindebohrung (6) des Gehäuses (1) aufweist, sowie mit einer auf der Radachse (8) drehbar gelagerten Felge (10) mit einem Reifen (11), wobei das besondere Kennzeichen vorliegt, dass mit der Radachse (8) ein Drehgriff (3) an der Radaussenseite fest verbunden ist. Das Rad hat den Vorteil, dass es ohne Werkzeug von Hand leicht z.B. in das Rasenmähergehäuse eingeschraubt werden kann und wieder leicht lösbar ist.

ACTORUM AG

Die Erfindung betrifft ein Rad gemäß dem Oberbegriff
des Schutzanspruchs 1.

Bei Rasenmähern dieser bekannten Gattung ist es bekannt,
den Abstand zwischen dem Schneidmesser und dem Erdboden
zu verändern, um unterschiedliche Schnitthöhen des
Grases wählen zu können. Eine Möglichkeit einer solchen
Höhenverstellung besteht darin, am Rasenmähergehäuse an
den für die Räder vorgesehenen Stellen jeweils mehrere
Gewindebohrungen in verschiedener Höhe vorzusehen. Jedes
Rad kann dann mit Hilfe eines entsprechenden Gewindes
am Ende seiner Radachse in die Gewindebohrung in der gewünschten Höhe eingeschraubt werden.

Bei dieser Konstruktion ist aber nachteilig, daß das Ein-
und Ausschrauben der Räder nur mit Hilfe eines Werkzeugs
erfolgen kann, weil für ein Einschrauben ohne Werkzeug das
aus dem Rad hervorstehende Ende der Radachse für ein ausreichendes Festhalten mit der Hand zu kurz ist und für das
Festdrehen des Gewindes eine zu geringe Angriffsfläche für
die Hand bietet.

Der Erfindung liegt somit die Aufgabe zugrunde, ein Rad,
insbesondere für einen Rasenmäher, anzugeben, das ohne Werkzeug von Hand mit einem Ende seiner Radachse in eine Gewindebohrung, z.B. in einem Rasenmähergehäuse, leicht eingeschraubt
werden kann und in entsprechender Weise wieder leicht lösbar
ist.

Diese Aufgabe wird gemäß der Erfindung durch das Kennzeichen
des Schutzanspruchs 1 gelöst. Dadurch ergibt sich an dem Rad
eine genügend große Angriffsfläche in hinreichendem radialen

0062358

Abstand von der Radachse, so daß ohne Zuhilfenahme eines Werkzeugs das Rad in eine Gewindebohrung des Rasenmähergehäuses eingeschraubt und gegebenenfalls in eine höher oder tiefer gelegene Bohrung umgesetzt werden kann.

Gemäß einer vorteilhaften Weiterbildung der Erfindung weist die Außenseite des Drehgriffs die Form einer geschlossenen Kappe mit mindestens einer axialsymmetrisch angeordneten Griffmulde auf.

Liegt nur eine solche Griffmulde vor, bildet der Drehgriff eine Griffnabe des Rades.

Gemäß einer bevorzugten Ausführungsform der Erfindung wird der Drehgriff von zwei, drei oder vier axialsymmetrisch angeordneten Griffmulden in der genannten Kappe gebildet. Dadurch ergeben sich mehrere Angriffsflächen am Drehgriff, an denen sich die Finger beim An- oder Abschrauben des Rades abstützen können.

Bei mehreren Griffmulden im Drehgriff sind diese vorzugsweise jeweils radialsymmetrisch zur Radachse, d.h. symmetrisch zu einem Radius der Drehachse, ausgebildet. Dadurch ergeben sich einerseits eine griffgünstige Form und andererseits ein ansprechendes ästhetisches Aussehen des Rades.

Andere vorteilhafte Weiterbildungen der Erfindung sind in den Schutzansprüchen 4 bis 8 angegeben.

Das erfindungsgemäße Rad, insbesondere der Drehgriff, besteht vorzugsweise ganz oder teilweise aus Metall oder Kunststoff.

Der Drehgriff und die mit ihm verbundene Radachse können
aus verschiedenen oder gleichen Materialien, gegebenenfalls einstückig, ausgebildet sein.

Der Drehgriff kann auch so gestaltet sein, daß nicht ins
Radinnere sich erstreckende Griffmulden, sondern entgegengesetzt hierzu an der Außenseite des Rades mindestens
eine hervorstehende Griffrippe vorgesehen ist.

Eine besonders bevorzugte Ausführungsform ist in der
Zeichnung beispielsweise veranschaulicht. Es zeigen:

Fig. 1    eine schematische perspektivische Ansicht
eines Teils eines Rasenmähers mit einem
daran zu befestigenden Rad mit Drehgriff,

Fig. 2    eine Ansicht der Außenseite eines anderen
Rades mit Drehgriff in größerem Maßstab und

Fig. 3    eine Seitenansicht des z.T. axial aufgeschnittenen Rades gemäß Fig. 2.

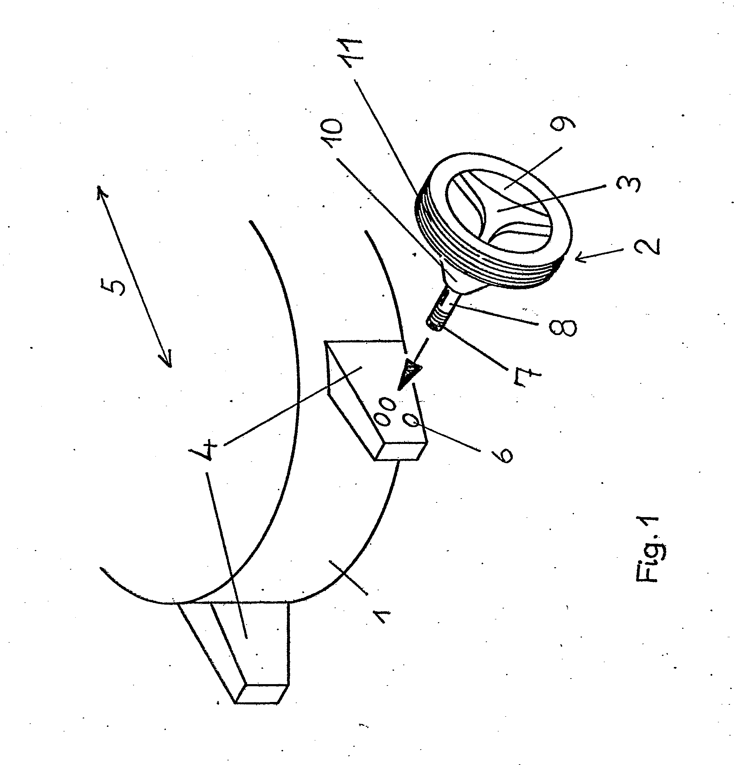

In der Fig. 1 sind ein Teil eines Gehäuses 1 eines Rasenmähers und ein Rad 2 mit einem Drehgriff 3 dargestellt.
Am Gehäuse 1 sind Holme 4 vorgesehen, die jeweils an ihrer
von der Rasenmähermitte abgewandten senkrechten Fläche,
die sich im wesentlichen parallel zur Laufrichtung 5 des
Rasenmähers erstreckt, drei in der Höhe gegeneinander versetzte Gewindebohrungen 6 zum Einschrauben eines Gewindes
7 an einem Ende einer Radachse 8 des Rades 2 aufweisen.
Der Drehgriff 3 ist mit der Radachse 8 fest verbunden und
hat etwa die Form eines nach außen gewölbten Sterns, dessen
drei Zacken gleiche Winkelabstände haben und durch radialsymmetrische Griffmulden 9 getrennt sind.

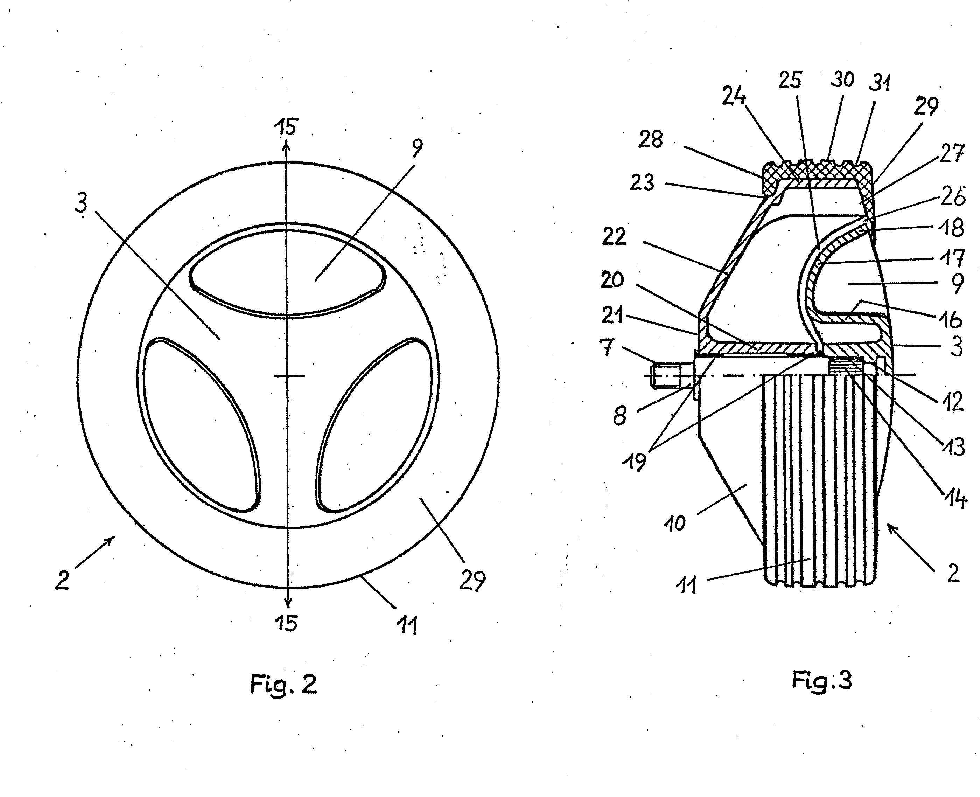

In den Fig. 2 und 3 ist eine bevorzugte Ausführungsform
eines erfindungsgemäßen Rades dargestellt. Das Rad 2
besteht im wesentlichen aus der Radachse 8, dem damit
fest verbundenen Drehgriff 3, einer Felge 10 und einem
Reifen 11.

Das dem Gehäuse 1 des Rasenmähers abgewandte Ende der
Radachse 8 weist eine Ringnut 12 und in einem daran anschließenden Längenabschnitt 13 mehrere axiale Nuten 14
auf. Die Ringnut 12, die Nuten 14 und das zugehörige Ende
der Radachse 8 werden vom Drehgriff 3 in Form einer nach
außen geschlossenen Kappe umfaßt.

Im Drehgriff 3 sind drei Griffmulden 9 vorgesehen, deren
Querschnitt entlang der in Fig. 2 angegebenen Ebene 15
in Fig. 3 dargestellt ist. Jede Griffmulde 9 hat einen
der Radachse 8 nächstgelegenen Wandabschnitt 16, der im
wesentlichen über die gesamte axiale Tiefe der Griffmulde 9
etwa achsparallel verläuft. Daran schließt sich jeweils
ein Muldenboden 17 an, der in Richtung zum Gehäuse 1
des Rasenmähers gewölbt ist und zur Radaußenseite in
einen äußeren Rand 18 des Drehgriffs 3 ausläuft.

Zwei im Abstand voneinander angeordnete Lagerbuchsen 19
sind auf der Radachse 8 drehbar gelagert und mit einer
Nabe 20 der Felge 10 fest verbunden. Die Felge 10 hat auf
der Radinnenseite einen der Radachse 8 nächstgelegenen,
radial verlaufenden Abschnitt 21, einen daran anschließenden
mittleren Abschnitt 22 in Form eines Kegelstumpfes mit
einem Scheitelwinkel von etwa 120°, wobei die Basis des
Kegelstumpfes der Radaußenseite zugewandt ist, sowie einen
über eine Schulter 23 daran anschließenden, zur Radachse 8
koaxial angeordneten, zylindrischen Abschnitt 24. Außerdem ist an der Felge 10 eine Rippe 25 vorgesehen, die von
dem der Radaußenseite zugewandten Ende der Nabe 20
im Abstand entlang dem Muldenboden 17 des Drehgriffs 3
bis zu einem Ende 26 in der Nähe des Rands 18 des Drehgriffs 3 verläuft.

Die innere Seitenwand 28 des Reifens 11 liegt auf der
Schulter 23. Die äußere Seitenwand 29 erstreckt sich über
einen offenen Abschnitt 27 der Felge 10, das Ende 26 der
Rippe 25 und im Abstand über den Rand 18 des Drehgriffs 3.
Die Lauffläche 30 des Reifens 11 ist mit mehreren in der
Reifenumfangsrichtung verlaufenden Profilrippen 31 versehen.

Bei der Benutzung des Rades 2 wird dessen Radachse 8 mit
Hilfe des Drehgriffs 3 ohne Werkzeug in eine der vorgesehenen Gewindebohrungen 6 im Gehäuse 1 des Rasenmähers
eingeschraubt. Zur Höhenverstellung des Rasenmähers wird
das Rad 2 durch Drehen des Drehgriffs 3 in die entsprechende Gegenrichtung gelöst und in eine andere Gewindebohrung 6 in der gewünschten Höhe umgesetzt.

Neben dieser Möglichkeit der Höhenverstellung bietet der
Drehgriff 3 den weiteren Vorteil, daß er das Rad 2 z.B.
gegen seitliche Stöße schützt.

Im übrigen wird bei der Verwendung der erfindungsgemäßen
Räder eine neuartige optische Wirkung erzielt, da sich
bei fahrendem Rasenmäher die an den Rädern vorhandenen
Drehgriffe nicht bewegen und den Eindruck stillstehender
Räder vermitteln.

0062358

Patentansprüche:

1. Rad, insbesondere für einen Rasenmäher, mit einer Radachse (8), die an ihrem dem Gehäuse (1) des Rasenmähers zugewandten Ende ein Gewinde (7) zum Einschrauben der Radachse (8) in eine Gewindebohrung (6) des Gehäuses (1) aufweist, sowie mit einer auf der Radachse (8) drehbar gelagerten Felge (10) mit einem Reifen (11), dadurch gekennzeichnet , daß mit der Radachse (8) ein Drehgriff (3) an der Radaußenseite fest verbunden ist.

2. Rad nach Anspruch 1, dadurch gekennzeichnet , daß die Außenseite des Drehgriffs (3) als geschlossene Kappe mit mindestens einer axialsymmetrisch angeordneten Griffmulde (9) ausgebildet ist.

0062358

3. Rad nach Anspruch 1 oder 2, dadurch gekennzeichnet, daß Griffmulden (9) des Drehgriffs (3) jeweils radialsymmetrisch zur Radachse (8) angeordnet sind.

4. Rad nach einem der Ansprüche 1 bis 3, dadurch gekennzeichnet, daß der Außenrand von drei Griffmulden (9) des Drehgriffs (3) elliptisch ausgebildet ist, wobei jeweils ein der Radachse (8) nächstgelegener Wandabschnitt (16) im wesentlichen über die gesamte axiale Tiefe der Griffmulde (9) etwa parallel zur Radachse (8) verläuft und der Muldenboden (17) in Richtung zum Gehäuse (1) des Rasenmähers gewölbt ist.

5. Rad nach einem der Ansprüche 1 bis 4, dadurch gekennzeichnet, daß das der Radaußenseite zugewandte Ende der Radachse (8) mindestens eine Ringnut (12) und mindestens eine axiale Nut (14) aufweist sowie der Drehgriff (3) an dieses Ende der Radachse (8) angeformt ist.

6. Rad nach einem der Ansprüche 1 bis 5, dadurch gekennzeichnet, daß sich von dem der Radaußenseite zugewandten Ende einer die Radachse (8) umgebenden Nabe (20) eine Rippe (25) mit axialem Spiel entlang dem Muldenboden (17) erstreckt.

7. Rad nach einem der Ansprüche 1 bis 6, dadurch gekennzeichnet, daß die äußere Seitenwand (29) des Reifens (11) ein Ende (26) der Rippe (25) und im Abstand den kreisförmigen Rand (18) des Drehgriffs (3) überdeckt.

8. Rad nach Anspruch 1, dadurch gekennzeichnet, daß der Drehgriff (3) an seiner Außenseite Griffrippen aufweist.

Fig. 1

Fig. 2

Fig. 3

2/2

0062358